(19) Europäisches Patentamt
European Patent Office
Office européen des brevets

(11) EP 2 511 340 A1

(12) # EUROPEAN PATENT APPLICATION
published in accordance with Art. 153(4) EPC

(43) Date of publication:
**17.10.2012 Bulletin 2012/42**

(21) Application number: **10836082.7**

(22) Date of filing: **10.12.2010**

(51) Int Cl.:
***C08L 69/00*** *(2006.01)* ***C08G 64/02*** *(2006.01)*

(86) International application number:
**PCT/JP2010/072283**

(87) International publication number:
**WO 2011/071163 (16.06.2011 Gazette 2011/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.12.2009 JP 2009280865**
**18.12.2009 JP 2009288107**
**20.08.2010 JP 2010185060**

(71) Applicant: **Mitsubishi Chemical Corporation**
**Chiyoda-ku**
**Tokyo 100-8251 (JP)**

(72) Inventor: **SASAKI Haruo**
**Kitakyushu-shi,**
**Fukuoka 806-0004 (JP)**

(74) Representative: **Vossius & Partner**
**Siebertstrasse 4**
**81675 München (DE)**

(54) **POLYCARBONATE RESIN COMPOSITION AND MOLDED ARTICLE**

(57) The invention is to provide a polycarbonate resin composition having excellent weatherability, transparency, hue, heat resistance, thermal stability, moldability, and mechanical strength and a molded article obtained therefrom. The invention relates to: a polycarbonate resin composition which includes a polycarbonate resin (A) containing constituent units derived from a dihydroxy compound (a) having the portion represented by the following formula (1) as part of the structure thereof and an aromatic polycarbonate resin (B) having a reduced viscosity of 0.50 dL/g or higher; and a molded article obtained from the composition. (The case where the portion represented by the following formula (1) is part of $-CH_2-O-H$ is excluded.)
[Chem. 1]

$$\{CH_2-O\} \quad (1)$$

EP 2 511 340 A1

## Description

### Technical Field

The present invention relates to a polycarbonate resin composition having excellent weatherability, transparency, hue, heat resistance, thermal stability, moldability, and mechanical strength and to a molded article obtained therefrom.

### Background Art

Polycarbonate resins are generally produced using bisphenols as a monomer ingredient, and are being extensively utilized as so-called engineering plastics in the fields of electrical/electronic parts, automotive parts, medical parts, building materials, films, sheets, bottles, optical recording media, lenses, etc. so as to take advantage of the superiority thereof such as transparency, heat resistance, and mechanical strength.
However, the conventional polycarbonate resins deteriorate in hue, transparency, and mechanical strength when used over a long period in places where the resins are exposed to ultraviolet rays or visible light. There hence have been limitations on outdoor use thereof and on use thereof in the vicinity of illuminators. Furthermore, use of the conventional polycarbonate resins as various molded articles has encountered a problem that the polycarbonate resins show poor mold release characteristics during melt molding and it is difficult to use the resins as transparent materials, optical materials, or the like.
Techniques in which a benzophenone-based ultraviolet absorber, benzotriazole-based ultraviolet absorber, or benzoxazine-based ultraviolet absorber is added to a polycarbonate resin in order to overcome such problems are widely known (for example, non-patent document 1).
It is also widely known that addition of a hindered amine-based (HALS) light stabilizer to a polycarbonate resin is impracticable because polycarbonate resins are unstable to basic ingredients, e.g., alkalis, even at ordinary temperature and are hydrolyzed by HALSs.
The bisphenol compounds for use in producing conventional polycarbonate resins have a benzene ring structure and hence show high absorption of ultraviolet rays.
This leads to a deterioration in the light resistance of the polycarbonate resins. Consequently, use of monomer units derived from an aliphatic dihydroxy compound or alicyclic dihydroxy compound which has no benzene ring structure in the molecular framework or from a cyclic dihydroxy compound having an ether bond in the molecule, such as isosorbide, is expected to theoretically improve light resistance. In particular, polycarbonate resins produced using, as a monomer, isosorbide obtained from biomass resources have excellent heat resistance and mechanical strength, and many investigations thereon hence have come to be made in recent years (for example, patent documents 1 to 7).
It is also widely known that a benzotriazole, benzophenone, or cyanoacrylate compound is added as an ultraviolet absorber to a polycarbonate resin composition obtained using a monomer having an ether bond in the molecule, such as isosorbide, isomannide, or isoidide, which has no benzene ring structure in the molecular framework (for example, patent document 8).

### Prior-Art Documents

#### Patent Documents

Patent Document 1: International Publication No. 2004/111106
Patent Document 2: JP-A-2006-232897
Patent Document 3: JP-A-2006-28441
Patent Document 4: JP-A-2008-24919
Patent Document 5: JP-A-2009-91404
Patent Document 6: JP-A-2009-91417
Patent Document 7: JP-A-2008-274007
Patent Document 8: JP-A-2007-70391

#### Non-Patent Document

Non-Patent Document 1: HONMA Seiichi, ed., Porikaboneto Jushi Handobukku, published by The Nikkan Kogyo Shinbun, Ltd., August 28, 1992.

## Summary of the Invention

### Problems that the Invention is to Solve

However, addition of an ultraviolet absorber in the manner described in non-patent document 1 poses the following problems although the addition brings about improvements in hue retention through ultraviolet irradiation, etc. Namely, there have been problems, for example, that the addition of the ultraviolet absorber deteriorates the hue, heat resistance, and transparency which are inherent in the resin and that the ultraviolet absorber volatilizes during molding to foul the mold.
Furthermore, since aliphatic dihydroxy compounds, alicyclic dihydroxy compounds, and cyclic dihydroxy compounds having an ether bond in the molecule, such as isosorbide, such as those shown in the patent documents 1 to 7, have no phenolic hydroxyl group, it is difficult to polymerize these compounds by the interfacial process which is widely known as a process for polycarbonate resin production using bisphenol A as a starting material. Usually, polycarbonate resins are produced from those compounds by the process which is called a transesterification process or a melt process. In this process, any of those dihydroxy compounds and a carbonic diester, e.g., diphenyl carbonate, are subjected to transesterification at a high temperature of 200°C or above in the presence of a basic catalyst, and the by-product, e.g., phenol, is removed from the system to allow the polymerization to proceed, thereby obtaining a polycarbonate resin. However, the polycarbonate resins obtained using monomers having no phenolic hydroxyl group, such as those shown above, have poor thermal stability as compared with polycarbonate resins obtained using monomers having phenolic hydroxyl groups, e.g., bisphenol A, and hence have had the following problem. The polycarbonate resins take a color during the polymerization or molding in which the resins are exposed to high temperatures and, as a result, the polycarbonate resins come to absorb ultraviolet rays and visible light and hence have impaired light resistance. Especially when a monomer having an ether bond in the molecule, such as isosorbide, was used, the polycarbonate resin considerably deteriorates in hue. A significant improvement has been desired. Furthermore, when such polycarbonate resins are to be used as various molded articles, the resins are melt-molded at high temperatures. For this application also, there has been a desire for a material having satisfactory thermal stability and excellent moldability and mold release characteristics.
Moreover, addition of an ultraviolet absorber in the manner described in patent document 8 has encountered a problem that the addition of the ultraviolet absorber deteriorates the hue, heat resistance, and transparency in a weatherability test which are inherent in the resin.
An object of the invention is to eliminate the problems of prior-art techniques described above and to provide a polycarbonate resin composition having excellent weatherability, transparency, hue, heat resistance, thermal stability, moldability, and mechanical strength and a molded article formed therefrom.

### Means for Solving the Problems

The present inventors diligently made investigations in order to overcome those problems. As a result, the inventors have found that a polycarbonate resin composition which is constituted of a polycarbonate resin (A) containing constituent units derived from a dihydroxy compound (a) having the portion represented by the following formula (1) as part of the structure thereof and an aromatic polycarbonate resin (B) and in which the aromatic polycarbonate resin (B) has a reduced viscosity of 0.50 dL/g or higher not only has excellent light resistance but also has excellent hue, heat resistance, thermal stability, moldability, and mechanical strength. The invention has been thus achieved.
[Chem. 1]

$$-\!\!(CH_2\text{-}O)\!\!- \qquad (1)$$

(The case where the portion represented by the formula (1) is part of $-CH_2-O-H$ is excluded.)
Essential points of the invention reside in the following [1] to [9].

[1] A polycarbonate resin composition which comprises a polycarbonate resin (A) containing constituent units derived from a dihydroxy compound (a) having the portion represented by the following formula (1) as part of the structure thereof and an aromatic polycarbonate resin (B) having a reduced viscosity of 0.50 dL/g or higher.

[Chem. 2]

$$-(\!-CH_2\text{-}O\text{-})\text{-} \qquad (1)$$

(The case where the portion represented by the formula (1) is part of $-CH_2-O-H$ is excluded.)

[2] The polycarbonate resin composition according to [1] above wherein the aromatic polycarbonate resin (B) has a viscosity-average molecular weight of 25,000 or higher.

[3] The polycarbonate resin composition according to [1] or [2] above wherein the dihydroxy compound (a) is a dihydroxy compound represented by the following formula (2).

[Chem. 3]

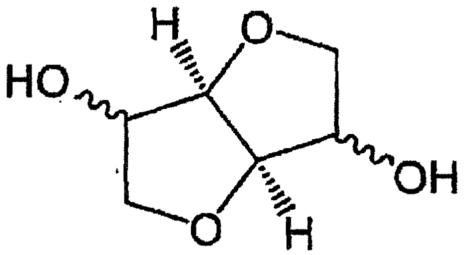

(2)

[4] The polycarbonate resin composition according to any one of [1] to [3] above wherein the amount of the aromatic polycarbonate resin (B) in 100 parts by weight of the polycarbonate resin composition is 1-99 parts by weight.

[5] The polycarbonate resin composition according to any one of [1] to [4] above which further contains an ultraviolet absorber in an amount of 0.0001-1 part by weight per 100 parts by weight of the mixture of the polycarbonate resin (A) and the aromatic polycarbonate resin (B).

[6] The polycarbonate resin composition according to any one of [1] to [5] above which further contains a hindered amine-based light stabilizer in an amount of 0.001-1 part by weight per 100 parts by weight of the mixture of the polycarbonate resin (A) and the aromatic polycarbonate resin (B).

[7] The polycarbonate resin composition according to any one of [1] to [6] above which further contains an antioxidant in an amount of 0.0001-1 part by weight per 100 parts by weight of the mixture of the polycarbonate resin (A) and the aromatic polycarbonate resin (B).

[8] The polycarbonate resin composition according to any one of [1] to [7] above which further contains a release agent in an amount of 0.0001-2 parts by weight per 100 parts by weight of the mixture of the polycarbonate resin (A) and the aromatic polycarbonate resin (B).

[9] A polycarbonate resin molded article obtained by molding the polycarbonate resin composition according to any one of [1] to [8] above.

Effects of the Invention

According to the invention, a polycarbonate resin composition which has excellent weatherability, hue, heat resistance, thermal stability, moldability, and mechanical strength and a molded article formed therefrom can be provided.

Modes for Carrying Out the Invention

Modes for carrying out the invention will be explained below in detail. The following explanations on constituent elements are for embodiments (representative embodiments) of the invention, and the invention should not be construed as being limited to the embodiments unless the invention departs from the spirit thereof.

<Polycarbonate Resin (A)>

The polycarbonate resin (A) to be used in the invention is obtained using at least one dihydroxy compound including a dihydroxy compound (a) having the portion represented by the following formula (1) as part of the structure thereof and a carbonic diester as starting materials, by condensation-polymerizing the starting materials by means of a transesterification reaction. Namely, the polycarbonate resin (A) to be used in the invention at least contains constituent units derived from a dihydroxy compound (a) having the portion represented by the following formula (1).

[Chem. 4]

$\{CH_2\text{-}O\}$ (1)

The case where the portion represented by the formula (1) is part of $-CH_2\text{-}O\text{-}H$ is excluded. Although the polycarbonate resin composition of the invention includes a polycarbonate resin (A) which at least contains constituent units derived from a dihydroxy compound (a) having the portion represented by formula (1), this polycarbonate resin (A) may be a copolycarbonate which further contains constituent units derived from one or more other dihydroxy compounds besides the constituent units derived from that dihydroxy compound. In the invention, one polycarbonate resin (A) may be used alone, or two or more polycarbonate resins (A) may be used as a mixture thereof.

When part of the constituent units derived from other dihydroxy compounds have been replaced with constituent units derived from an aromatic dihydroxy compound, then this polycarbonate resin (A) may be regarded as the aromatic polycarbonate resin (B), which will be described later. In the invention, however, there are no cases where one polycarbonate serves as both a polycarbonate resin (A) and an aromatic polycarbonate resin (B). If a polycarbonate resin (A) has constituent units derived from an aromatic dihydroxy compound, this polycarbonate resin composition of the invention includes that polycarbonate resin (A) and at least one polycarbonate selected from another kind of polycarbonate resin (A) and an aromatic polycarbonate resin (B).

<Dihydroxy Compounds>

The dihydroxy compounds which can be used for the polycarbonate resin (A) according to the invention are not particularly limited so long as the compounds include a dihydroxy compound (a) having the portion represented by the formula (1) as part of the structure thereof. Examples of the dihydroxy compound (a) having the portion represented by the formula (1) as part of the structure thereof include oxyalkylene glycols such as diethylene glycol, triethylene glycol, and tetraethylene glycol, compounds which have an aromatic group as a side chain and have, in the main chain, ether groups each bonded to an aromatic group, such as 9,9-bis(4-(2-hydroxyethoxy)phenyl)fluorene, 9,9-bis(4-(2-hydroxyethoxy)-3-methylphenyl)fluorene, 9,9-bis(4-(2-hydroxyethoxy)-3-isopropylphenyl)fluorene, 9,9-bis(4-(2-hydroxyethoxy)-3-isobutylphenyl)fluorene, 9,9-bis(4-(2-hydroxyethoxy)-3-tert-butylphenyl)fluorene, 9,9-bis(4-(2-hydroxyethoxy)-3-cyclohexylphenyl)fluorene, 9,9-bis(4-(2-hydroxyethoxy)-3-phenylphenyl)fluorene, 9,9-bis(4-(2-hydroxyethoxy)-3,5-dimethylphenyl)fluorene, 9,9-bis(4-(2-hydroxyethoxy)-3-tert-butyl-6-methylphenyl)fluorene and 9,9-bis (4-(3-hydroxy-2,2-dimethylpropoxy)phenyl)fluorene, dihydroxy compounds represented by the following formula (2), and compounds having a cyclic ether structure, such as the spiro glycol, represented by the following formula (3) and formula (4). Of these, oxyalkylene glycols such as diethylene glycol and triethylene glycol and compounds having a cyclic ether structure are preferred from the standpoints of availability, handling, reactivity during polymerization, and the hue of the polycarbonate resin (A) to be obtained. Preferred of the compounds having a cyclic ether structure are compounds having a plurality of cyclic structures. Preferred from the standpoint of heat resistance are anhydrous sugar alcohols represented by dihydroxy compounds represented by the following formula (2) and the compound having a cyclic ether structure which is represented by the following formula (3). Especially preferred are anhydrous sugar alcohols represented by dihydroxy compounds represented by the following formula (2).

[Chem. 5]

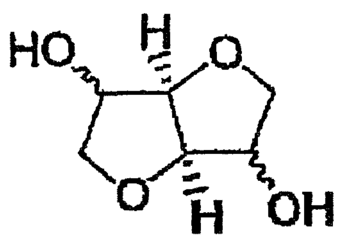

(2)

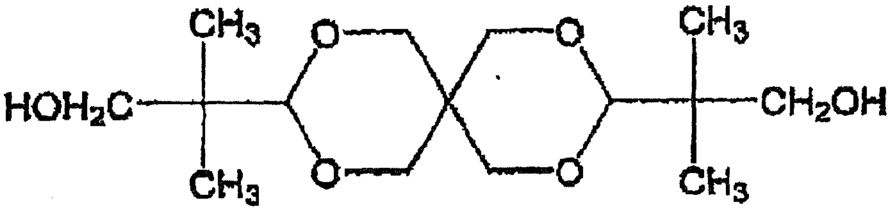

(3)

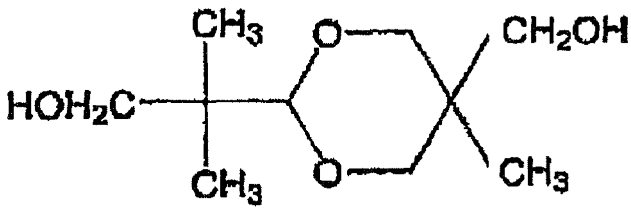

(4)

These compounds may be used alone or in combination of two or more thereof according to the performances required of the polycarbonate resin (A) to be obtained.
Examples of the dihydroxy compounds represented by formula (2) include isosorbide, isomannide, and isoidide, which are stereoisomers. These compounds may be used alone or in combination of two or more thereof.

From the standpoint of the light resistance of the polycarbonate resin composition, it is preferred to use dihydroxy compounds having no aromatic ring structure among those dihydroxy compounds. Most preferred of these dihydroxy compounds is isosorbide from the standpoints of availability, ease of production, light resistance, optical properties, moldability, heat resistance, and carbon neutrality. Isosorbide is obtained by the dehydrating condensation of sorbitol, which is produced from various starches that are plant-derived abundant resources and are easily available.

The polycarbonate resin (A) to be used in the invention may contain constituent units derived from dihydroxy compounds (hereinafter often referred to as "other dihydroxy compounds") other than the dihydroxy compound (a) to be used for the invention which has the portion represented by formula (1) as part of the structure thereof. However, the polycarbonate resin (A) contains constituent units derived from a dihydroxy compound (a) having the portion represented by formula (1) as part of the structure thereof, in an amount which is preferably 10% by mole or more, more preferably 20% by mole or more, even more preferably 30% by mole or more, especially preferably 40% by mole or more, and is preferably 90% by mole or less, more preferably 80% by mole or less, especially preferably 75% by mole or less, based on all constituent units derived from dihydroxy compounds. It is, however, noted that when a polycarbonate resin (A) having aromatic rings is used, this polycarbonate resin differs in structure from the polycarbonate resin (B).

Examples of the other dihydroxy compounds include dihydroxy compounds of aliphatic hydrocarbons, such as ethylene glycol, 1,3-propanediol, 1,2-propanediol, 1,4-butanediol, 1,3-butanediol, 1,2-butanediol, 1,5-heptanediol, and 1,6-hexanediol, dihydroxy compounds of alicyclic hydrocarbons, such as 1,2-cyclohexanedimethanol, 1,3-cyclohexanedimethanol, 1,4-cyclohexanedimethanol, tricyclodecanedimethanol, pentacyclopentadecanedimethanol, 2,6-decalindimethanol, 1,5-decalindimethanol, 2,3-decalindimethanol, 2,3-norbomanedimethanol, 2,5-norbomanedimethanol, and 1,3-adamantanedimethanol, and aromatic bisphenol compounds such as 2,2-bis(4-hydroxyphenyl)propane [=bisphenol A], 2,2-bis(4-hydroxy-3,5-dimethylphenyl)propane, 2,2-bis(4-hydroxy-3,5-diethylphenyl)propane, 2,2-bis(4-hydroxy-(3,5-diphenyl)phenyl)propane, 2,2-bis(4-hydroxy-3,5-dibromophenyl)propane, 2,2-bis(4-hydroxyphenyl)pentane, 2,4'-dihydroxydiphenylmethane, bis(4-hydroxyphenyl)methane, bis(4-hydroxy-5-nitrophenyl)methane, 1,1-bis(4-hydroxyphenyl)ethane, 3,3-bis(4-hydroxyphenyl)pentane, 1,1-bis(4-hydroxyphenyl)cyclohexane, bis(4-hydroxyphenyl) sulfone, 2,4'-dihydroxydiphenyl sulfone, bis(4-hydroxyphenyl) sulfide, 4,4'-dihydroxydiphenyl ether, 4,4'-dihydroxy-3,3'-dichlorodiphenyl ether, 9,9-bis(4-(2-hydroxyethoxy-2-methyl)phenyl)fluorene, 9,9-bis(4-hydroxyphenyl)fluorene, and 9,9-bis(4-hydroxy-2-methylphenyl)fluorene.

Preferred of these, from the standpoint of the light resistance of the polycarbonate resin composition, are the dihydroxy compounds having no aromatic ring structure in the molecular structure, i.e., the aliphatic dihydroxy compounds and/or the dihydroxy compounds of alicyclic hydrocarbons. Especially preferred aliphatic dihydroxy compounds are 1,3-propanediol, 1,4-butanediol, and 1,6-hexanediol. The dihydroxy compounds of alicyclic hydrocarbons, the dihydroxy compounds of alicyclic hydrocarbons each are a compound which has a hydrocarbon framework of a cyclic structure and two hydroxy groups and in which the hydroxy groups each may have been directly bonded to the cyclic structure or may have been bonded to the cyclic structure through a substituent. The cyclic structure may be a monocycle or a polycycle. Especially preferred dihydroxy compounds of alicyclic hydrocarbons are 1,4-cyclohexanedimethanol and tricyclodecanedimethanol.

Use of such other dihydroxy compounds makes it possible to obtain effects such as an improvement in the flexibility of the polycarbonate resin (A), improvement in the moldability thereof, etc. However, in the case where the content of constituent units derived from other dihydroxy compounds is too high, this may result in a decrease in mechanical property and a decrease in heat resistance.
The dihydroxy compound to be used for the invention may contain stabilizers such as a reducing agent, antioxidant, free-oxygen scavenger, light stabilizer, antacid, pH stabilizer, and heat stabilizer. Since the dihydroxy compound to be used for the invention is apt to alter especially under acidic conditions, it is preferred that the dihydroxy compound should contain a basic stabilizer. Examples of the basic stabilizer include the hydroxides, carbonates, phosphates, phosphites, hypophosphites, borates, and fatty acid salts of Group-1 or Group-2 metals of the long-form periodic table (Nomenclature of Inorganic Chemistry IUPAC Recommendations 2005). Examples thereof further include basic ammonium compounds

such as tetramethylammonium hydroxide, tetraethylammonium hydroxide, tetrapropylammonium hydroxide, tetrabutylammonium hydroxide, trimethylethylammonium hydroxide, trimethylbenzylammonium hydroxide, trimethylphenylammonium hydroxide, triethylmethylammonium hydroxide, triethylbenzylammonium hydroxide, triethylphenylammonium hydroxide, tributylbenzylammonium hydroxide, tributylphenylammonium hydroxide, tetraphenylammonium hydroxide, benzyltriphenylammonium hydroxide, methyltriphenylammonium hydroxide, and butyltriphenylammonium hydroxide and amine compounds such as 4-aminopyridine, 2-aminopyridine, N,N-dimethyl-4-aminopyridine, 4-diethylaminopyridine, 2-hydroxypyridine, 2-methoxypyridine, 4-methoxypyridine, 2-dimethylaminoimidazole, 2-methoxyimidazole, imidazole, 2-mercaptoimidazole, 2-methylimidazole, and aminoquinoline. Of these, the phosphates and phosphites of sodium or potassium are preferred from the standpoints of the effect thereof and the ease of removal thereof by distillation which will be described later. Especially preferred are disodium hydrogen phosphate and disodium hydrogen phosphite.

There are no particular limitations on the content of those basic stabilizers in the dihydroxy compound to be used for the invention. In the case where the content thereof is too low, there is a possibility that the effect of preventing the alteration of the dihydroxy compound to be used for the invention might not be obtained. When the content thereof is too high, there are the cases where the dihydroxy compound to be used for the invention is altered. Consequently, the content of those basic stabilizers is generally 0.0001-1% by weight, preferably 0.001-0.1% by weight, based on the dihydroxy compound to be used for the invention.

When the dihydroxy compound to be used for the invention which contains those basic stabilizers is used as a starting material for producing a polycarbonate resin, not only the basic stabilizers themselves serve as a polymerization catalyst to make it difficult to control polymerization rate and quality, but also the presence of the basic stabilizers leads to a deterioration in initial hue, resulting in molded articles having impaired light resistance. It is therefore preferred that the basic stabilizers should be removed with an ion-exchange resin or by distillation or the like before the dihydroxy compound is used as a starting material for producing a polycarbonate resin.

In the case where the dihydroxy compound to be used for the invention is a compound having a cyclic ether structure, e.g., isosorbide, this dihydroxy compound is apt to be gradually oxidized by oxygen. It is therefore important to prevent water inclusion during storage or production in order to prevent decomposition caused by oxygen. It is also important to use a free-oxygen scavenger or the like or to handle the dihydroxy compound in a nitrogen atmosphere. There are the cases where isosorbide, upon oxidation, generates decomposition products including formic acid. For example, in the case where isosorbide containing those decomposition products is used as a starting material for producing a polycarbonate resin, there is the possibility of resulting in a colored polycarbonate resin. There also is a possibility that the decomposition products considerably deteriorate the properties of the resin. In addition, there are the cases where the decomposition products affect the polymerization reaction to make it impossible to obtain a polymer having a high molecular weight. Use of such isosorbide hence is undesirable.

It is preferred to conduct purification by distillation in order to obtain the dihydroxy compound to be used for the invention which does not contain the oxidative-decomposition products and to remove the basic stabilizers described above. The distillation in this case may be simple distillation or continuous distillation, and is not particularly limited. With respect to distillation conditions, it is preferred to conduct distillation at a reduced pressure in an inert gas atmosphere such as argon or nitrogen. From the standpoint of inhibiting thermal alteration, it is preferred to conduct the distillation under the conditions of 250°C or lower, preferably 200°C or lower, especially 180°C or lower.

Through such purification by distillation, the content of formic acid in the dihydroxy compound to be used for the invention is reduced to preferably 20 weight ppm or less, more preferably 10 weight ppm or less, especially preferably 5 weight ppm or less. As a result, when dihydroxy compounds including this dihydroxy compound to be used for the invention are used as a starting material for producing a polycarbonate resin, polymerizability is not impaired and a polycarbonate resin (A) having an excellent hue and excellent thermal stability can be produced. The content of formic acid is determined by ion chromatography.

<Carbonic Diester>

The polycarbonate resin (A) to be used in the invention can be obtained using at least one dihydroxy compound including the dihydroxy compound to be used for the invention described above and a carbonic diester as starting materials, by condensation-polymerizing the starting materials by means of a transesterification reaction.
Examples of the carbonic diester to be used usually include compounds represented by the following formula (5). One of these carbonic diesters may be used alone, or a mixture of two or more thereof may be used.

[Chem. 6]

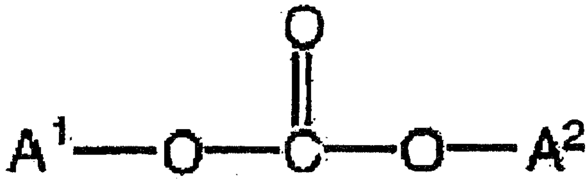

(5)

In the formula (5), $A^1$ and $A^2$ each independently are a substituted or unsubstituted aliphatic group having 1-18 carbon atoms or a substituted or unsubstituted aromatic group.
Examples of the carbonic diesters represented by the formula (5) include diphenyl carbonate, substituted diphenyl carbonates, e.g., ditolyl carbonate, dimethyl carbonate, diethyl carbonate, and di-t-butyl carbonate. Preferred are diphenyl carbonate and substituted diphenyl carbonates. Especially preferred is diphenyl carbonate. Incidentally, there are the cases where carbonic diesters contain impurities such as chloride ions and where the impurities inhibit the polymerization reaction and impair the hue of the polycarbonate resin to be obtained. It is therefore preferred that a carbonic diester which has been purified by, for example, distillation should be used according to need.

<Transesterification Reaction Catalyst>

The polycarbonate resin (A) to be used in the invention may be produced by subjecting at least one dihydroxy compound including the dihydroxy compound to be used for the invention as described above and a carbonic diester represented by the formula (5) to a transesterification reaction. More specifically, the polycarbonate resin is obtained by subjecting the starting materials to transesterification and removing the by-product monohydroxy compound, etc. from the system. In this case, polycondensation is usually conducted by means of a transesterification reaction in the presence of a transesterification reaction catalyst.

The transesterification reaction catalyst (hereinafter often referred to simply as "catalyst" or "polymerization catalyst") which can be used for producing the polycarbonate resin (A) to be used in the invention can affect light transmittance as measured especially at a wavelength of 350 nm and yellowness index value.
The catalyst to be used is not limited so long as the catalyst enables the polycarbonate resin (A) produced therewith to satisfy, in particular, light resistance among light resistance, transparency, hue, heat resistance, thermal stability, and mechanical strength. Examples thereof include compounds of metals belonging to the Group 1 or Group 2 of the long-form periodic table (hereinafter referred to simply as "Group 1" or "Group 2") and basic compounds such as basic boron compounds, basic phosphorus compounds, basic ammonium compounds, and amine compounds. It is preferred to use a Group-1 metal compound and/or a Group-2 metal compound.

It is possible to use a basic compound such as a basic boron compound, basic phosphorus compound, basic ammonium compound, or amine compound as an auxiliary together with a Group-1 metal compound and/or a Group-2 metal compound. It is, however, especially preferred to use a Group-1 metal compound and/or a Group-2 metal compound only.
With respect to the form of the Group-1 metal compound and/or Group-2 metal compound, the compound is used usually in the form of a hydroxide or a salt such as carbonate, carboxylate, or phenolate. However, hydroxides, carbonates, and acetates are preferred from the standpoints of availability and handleability, and acetates are preferred from the standpoints of hue and activity in polymerization.

Examples of the Group-1 metal compound include sodium hydroxide, potassium hydroxide, lithium hydroxide, cesium hydroxide, sodium hydrogen carbonate, potassium hydrogen carbonate, lithium hydrogen carbonate, cesium hydrogen carbonate, sodium carbonate, potassium carbonate, lithium carbonate, cesium carbonate, sodium acetate, potassium acetate, lithium acetate, cesium acetate, sodium stearate, potassium stearate, lithium stearate, cesium stearate, sodium boron hydride, potassium boron hydride, lithium boron hydride, cesium boron hydride, phenylated boron-sodium compounds, phenylated boron-potassium compounds, phenylated boron-lithium compounds, phenylated boron-cesium compounds, sodium benzoate, potassium benzoate, lithium benzoate, cesium benzoate, disodium hydrogen phosphate, dipotassium hydrogen phosphate, dilithium hydrogen phosphate, dicesium hydrogen phosphate, disodium phenyl phosphate, dipotassium phenyl phosphate, dilithium phenyl phosphate, dicesium phenyl phosphate, alcoholates or phenolates of sodium, potassium, lithium, and cesium, and the disodium salt, dipotassium salt, dilithium salt, and dicesium salt of bisphenol A. Preferred of these are the lithium compounds.

Examples of the Group-2 metal compound include calcium hydroxide, barium hydroxide, magnesium hydroxide, strontium hydroxide, calcium hydrogen carbonate, barium hydrogen carbonate, magnesium hydrogen carbonate, strontium hydrogen carbonate, calcium carbonate, barium carbonate, magnesium carbonate, strontium carbonate, calcium

acetate, barium acetate, magnesium acetate, strontium acetate, calcium stearate, barium stearate, magnesium stearate, and strontium stearate. Preferred of these are the magnesium compounds, the calcium compounds, and the barium compounds. From the standpoints of activity in polymerization and the hue of the polycarbonate resin to be obtained, the magnesium compounds and/or the calcium compounds are more preferred, and the calcium compounds are most preferred.

Examples of the basic boron compounds include the sodium salts, potassium salts, lithium salts, calcium salts, barium salts, magnesium salts, or strontium salts of tetramethylboron, tetraethylboron, tetrapropylboron, tetrabutylboron, trimethylethylboron, trimethylbenzylboron, trimethylphenylboron, triethylmethylboron, triethylbenzylboron, triethylphenylboron, tributylbenzylboron, tributylphenylboron, tetraphenylboron, benzyltriphenylboron, methyltriphenylboron, and butyltriphenylboron.

Examples of the basic phosphorus compounds include triethylphosphine, tri-n-propylphosphine, triisopropylphosphine, tri-n-butylphosphine, triphenylphosphine, tributylphosphine, and quaternary phosphonium salts.

Examples of the basic ammonium compounds include tetramethylammonium hydroxide, tetraethylammonium hydroxide, tetrapropylammonium hydroxide, tetrabutylammonium hydroxide, trimethylethylammonium hydroxide, trimethylbenzylammonium hydroxide, trimethylphenylammonium hydroxide, triethylmethylammonium hydroxide, triethylbenzylammonium hydroxide, triethylphenylammonium hydroxide, tributylbenzylammonium hydroxide, tributylphenylammonium hydroxide, tetraphenylammonium hydroxide, benzyltriphenylammonium hydroxide, methyltriphenylammonium hydroxide, and butyltriphenylammonium hydroxide.

Examples of the amine compounds include 4-aminopyridine, 2-aminopyridine, N,N-dimethyl-4-aminopyridine, 4-diethylaminopyridine, 2-hydroxypyridine, 2-methoxypyridine, 4-methoxypyridine, 2-dimethylaminoimidazole, 2-methoxyimidazole, imidazole, 2-mercaptoimidazole, 2-methylimidazole, and aminoquinoline.

The amount of the polymerization catalyst to be used is preferably 0.1-300 μmol, more preferably 0.5-100 μmol, per mole of all dihydroxy compounds subjected to the polymerization. Especially in the case where use is made of one or more compounds containing at least one metal selected from the group consisting of lithium and the Group-2 metals of the long-form periodic table, in particular, in the case where a magnesium compound and/or a calcium compound is used, the amount of this catalyst is preferably 0.1 μmol or more, more preferably 0.5 μmol or more, especially preferably 0.7 μmol or more, in terms of metal amount per mole of all dihydroxy compounds. The suitable upper limit thereof is preferably 20 μmol, more preferably 10 μmol, especially preferably 3 μmol, most preferably 1.5 μmol, in particular 1.0 μmol.

In the case where the amount of the catalyst is too small, the rate of polymerization is too low. As a result, a higher polymerization temperature must be used in order to obtain a polycarbonate resin (A) having a desired molecular weight, and the polycarbonate resin (A) thus obtained has an impaired hue and impaired light resistance. In addition, there is a possibility that an unreacted starting material might volatilize during the polymerization to change the molar proportions of the at least one dihydroxy compound including the dihydroxy compound to be used for the invention and of the carbonic diester represented by the formula (5) and a desired molecular weight might not be reached. On the other hand, in the case where the polymerization catalyst is used in too large an amount, there is a possibility that the resultant polycarbonate resin (A) might have an impaired hue and impaired light resistance.

In the case where diphenyl carbonate or a substituted diphenyl carbonate, e.g., ditolyl carbonate, is used as a carbonic diester represented by the formula (5) to produce a polycarbonate resin (A) to be used in the invention, phenol or a substituted phenol generates as a by-product and unavoidably remains in the polycarbonate resin (A). However, since phenol and the substituted phenol also have an aromatic ring, there are the cases where not only these compounds absorb ultraviolet rays to serve as a factor contributing to a deterioration in light resistance but also the compounds are causative of an odor during molding. After an ordinary batch reaction, the polycarbonate resin (A) contains an aromatic monohydroxy compound having an aromatic ring, e.g., by-product phenol, in an amount of 1,000 weight ppm or more. From the standpoints of light resistance and odor diminution, it is preferred to reduce the content of the aromatic monohydroxy compound to preferably 700 weight ppm or less, more preferably 500 weight ppm or less, especially 300 weight ppm or less, using a horizontal reactor having excellent volatilizing performance or using an extruder having a vacuum vent. It is, however, noted that it is difficult to industrially completely remove the aromatic monohydroxy compound, and the lower limit of the content thereof is generally 1 weight ppm or higher.

Those aromatic monohydroxy compounds may, of course, have substituents, depending on the starting materials used. For example, the compounds may have an alkyl group having up to 5 carbon atoms or the like.

There is a possibility that when Group-1 metals, especially sodium, potassium, and cesium, in particular, lithium, sodium, potassium, and cesium, are contained in the polycarbonate resin (A) in a large amount, these metals might adversely affect the hue. These metals do not come only from the catalyst used but may come from starting materials and the reactor. Consequently, the total amount of compounds of those metals in the polycarbonate resin (A) is generally 1 weight ppm or less, preferably 0.8 weight ppm or less, more preferably 0.7 weight ppm or less, in terms of metal amount.

The content of metals in the polycarbonate resin (A) can be determined by recovering the metals contained in the polycarbonate resin by a technique such as wet ashing and then determining the amount of the metals using a

technique such as atomic emission, atomic absorption, or inductively coupled plasma (ICP) spectroscopy.

<Process for Producing Polycarbonate Resin (A)>

Although the polycarbonate resin (A) to be used in the invention is obtained by condensation-polymerizing one or more dihydroxy compounds including the dihydroxy compound to be used for the invention with a carbonic diester represented by the general formula (5) by means of a transesterification reaction, it is preferred to evenly mix the starting materials, i.e., the dihydroxy compounds and the carbonic diester, prior to the transesterification reaction.

The temperature at which the starting materials are mixed together is generally 80°C or higher, preferably 90°C or higher, and the upper limit thereof is generally 250°C or lower, preferably 200°C or lower, more preferably 150°C or lower. Especially suitable is a temperature of 100-120°C. So long as the lower limit of the mixing temperature is within that range, the starting materials show a satisfactory dissolution rate and satisfactory solubility, and troubles such as solidification are less apt to arise. So long as the upper limit of the mixing temperature is within that range, the dihydroxy compounds are less apt to deteriorate thermally and, as a result, the polycarbonate resin obtained has an improved hue, which does not adversely affect light resistance.

It is preferred from the standpoint of preventing hue deterioration that an operation for mixing the dihydroxy compounds including the dihydroxy compound to be used for the invention and the carbonic diester represented by the formula (5), which are starting materials for the polycarbonate resin (A) to be used in the invention, should be conducted in an atmosphere having an oxygen concentration of 10 vol% or less, preferably 0.0001-10 vol%, especially 0.0001-5 vol%, in particular 0.0001-1 vol%.

It is preferred that for obtaining the polycarbonate resin (A) to be used in the invention, the carbonic diester represented by the formula (5) should be used in such an amount that the molar proportion thereof to the dihydroxy compounds to be subjected to the reaction, which include the dihydroxy compound to be used for the invention, is 0.90-1.20. The molar proportion thereof is more preferably 0.95-1.10.
So long as the molar proportion thereof is not less than the lower limit, the polycarbonate resin produced is prevented from having an increased amount of terminal hydroxyl groups. This polymer hence has thermal stability and does not take a color upon molding. Furthermore, this transesterification reaction is less apt to encounter troubles that the rate of the reaction decreases and that a desired high-molecular polymer is not obtained.

So long as the molar proportion thereof is not higher than the upper limit, there is no possibility that the rate of transesterification reaction might decrease or that it might be difficult to produce a polycarbonate resin (A) having a desired molecular weight. The decrease in the rate of transesterification reaction enhances heat history during the polymerization reaction, resulting in a possibility that the enhanced heat history might impair the hue and light resistance of the polycarbonate resin obtained.

Furthermore, when the molar proportion of the carbonic diester represented by the formula (5) to the dihydroxy compounds including the dihydroxy compound to be used for the invention is too high, there are the cases where the polycarbonate resin (A) obtained has an increased content of the residual carbonic diester and the residual carbonic diester absorbs ultraviolet rays to impair the light resistance of the polycarbonate resin. Such too high proportions of the carbonic diester are hence undesirable. The concentration of the carbonic diester remaining in the polycarbonate resin (A) to be used in the invention is preferably 200 weight ppm or less, more preferably 100 weight ppm or less, even more preferably 60 weight ppm or less, especially preferably 30 weight ppm or less. Actually, the polycarbonate resin (A) may contain unreacted carbonic diesters. A lower limit of the concentration thereof is generally 1 weight ppm or higher.

In the invention, a process in which the dihydroxy compounds are condensation-polymerized with the carbonic diester is conducted in the presence of the catalyst described above usually in multiple stages using a plurality of reactors. The mode of reaction operation may be any of the batch type, the continuous type, and a combination of the batch type and the continuous type.

It is preferred that in the initial stage of the polymerization, the polymerization should be conducted at a relatively low temperature and under relatively low vacuum to obtain a prepolymer, and that in the late stage of the polymerization, the polymerization should be conducted at a relatively high temperature under relatively high vacuum to heighten the molecular weight to a given value. It is, however, important from the standpoints of hue and light resistance that a jacket temperature, an internal temperature, and an internal pressure of the system should be suitably selected for each molecular-weight stage. For example, in the case where either temperature or pressure is changed too speedily before the polymerization reaction reaches a given value, an unreacted monomer is distilled off to change the molar ratio of the dihydroxy compounds to the carbonic diester. This may result in a decrease in polymerization rate or make it impossible to obtain a polymer having a given molecular weight or having given end groups. There hence is a possibility that the objects of the invention cannot finally be accomplished.

To provide a polymerizer with a reflux condenser is effective for inhibiting the monomers from being distilled off. This effect is high especially in the reactor for the initial stage of polymerization, in which the amount of unreacted monomer ingredients is large. The temperature of the coolant which is being introduced into the reflux condenser can

be suitably selected according to the monomers used. However, the temperature of the coolant being introduced into the reflux condenser, as measured at the inlet of the reflux condenser, is generally 45-180°C, preferably 80-150°C, especially preferably 100-130°C. In the case where the temperature of the coolant being introduced into the reflux condenser is too high, the amount of the monomers being refluxed decreases, resulting in a decrease in the effect of the refluxing. In the case where the temperature thereof is too low, the efficiency of the removal by distillation of the monohydroxy compound to be removed by distillation tends to decrease. As the coolant, use may be made of hot water, steam, a heat-medium oil, or the like. Preferred is steam or a heat-medium oil.

The selection of the kind and amount of a catalyst described above is important for maintaining a suitable polymerization rate and inhibiting the monomers from being distilled off and for simultaneously enabling the finally obtained polycarbonate resin to have intact properties such as hue, thermal stability, and light resistance.

It is preferred that the polycarbonate resin (A) to be used in the invention should be produced by polymerizing the starting materials in multiple stages using a catalyst and a plurality of reactors. The reasons why the polymerization is conducted in a plurality of reactors are that in the initial stage of the polymerization reaction, since the monomers are contained in a large amount in the liquid reaction mixture, it is important that the monomers should be inhibited from volatilizing off while maintaining a necessary polymerization rate, and that in the late stage of the polymerization reaction, it is important to sufficiently remove by distillation the by-product monohydroxy compound in order to shift the equilibrium to the polymerization side. For thus setting different sets of polymerization reaction conditions, it is preferred to use a plurality of polymerizers arranged serially, from the standpoint of production efficiency.

The number of reactors to be used in the process of the invention is not limited so long as the number thereof is at least 2 as described above. From the standpoints of production efficiency, etc., the number thereof is 3 or more, preferably 3-5, especially preferably 4.

In the invention, the process may be conducted in various manners so long as two or more reactors are used. For example, a plurality of reaction stages differing in conditions are formed in any of the reactors, or the temperature and the pressure may be continuously changed in any of the reactors.

In the invention, the polymerization catalyst can be introduced into a starting-material preparation tank or a starting-material storage tank, or can be introduced directly into a polymerization vessel. However, from the standpoints of stability of feeding and polymerization control, a catalyst supply line is disposed somewhere in a starting-material line before a polymerization vessel, and the catalyst is supplied preferably in the form of an aqueous solution.

With respect to polymerization reaction temperature, too low temperatures result in a decrease in productivity and cause the product to undergo an enhanced heat history. Too high temperatures not only result in monomer volatilization but also result in the possibility of enhancing degradation and coloring of the polycarbonate resin.

Specifically, the reaction in the first stage may be conducted at a temperature of 140-270°C, preferably 180-240°C, more preferably 200-230°C, in terms of the maximum internal temperature of the polymerizer, and a pressure of 110-1 kPa, preferably 70-5 kPa, more preferably 30-10 kPa (absolute pressure) for 0.1-10 hours, preferably 0.5-3 hours, while the monohydroxy compound which generates is being removed from the reaction system by distillation.

In the second and any succeeding stages, the pressure of the reaction system is gradually lowered from the pressure used in the first stage, and the polymerization is conducted while the monohydroxy compound which generates is being continuously removed from the reaction system. Finally, the pressure (absolute pressure) of the reaction system is lowered to 200 Pa or below. The second and any succeeding stages are thus conducted at a maximum internal temperature of 210-270°C, preferably 220-250°C, for a period of generally 0.1-10 hours, preferably 1-6 hours, especially preferably 0.5-3 hours.

Especially from the standpoints of inhibiting the polycarbonate resin (A) from taking a color or deteriorating thermally and of thereby obtaining the polycarbonate resin (A) having a satisfactory hue and satisfactory light resistance, it is preferred that the maximum internal temperature in all reaction stages should be lower than 250°C, in particular 225-245°C. From the standpoints of inhibiting the rate of polymerization from decreasing in the latter half of the polymerization reaction and of thereby minimizing the deterioration caused by heat history, it is preferred to use, in the final stage of the polymerization, a horizontal reactor having excellent plug flow characteristics and interface renewal characteristics.

In the case where the polymerization is conducted at too high a temperature or for too long a period in order to obtain a polycarbonate resin (A) having a given molecular weight, there is a tendency that the resultant polycarbonate resin has a reduced ultraviolet transmittance and an increased YI value.

From the standpoint of effective utilization of resources, it is preferred that the monohydroxy compound which generated as a by-product should be reused as a starting material for diphenyl carbonate, bisphenol A, or the like after purified according to need.

The polycarbonate resin (A) to be used in the invention, after having been obtained through polycondensation as described above, is usually solidified by cooling and pelletized with a rotary cutter or the like.

Methods for the pelletization are not limited. Examples thereof include: a method in which the polycarbonate resin is discharged in a molten state from the final polymerizer, cooled and solidified in a strand form, and pelletized; a

method in which the resin is fed in a molten state from the final polymerizer to a single- or twin-screw extruder, melt-extruded, subsequently cooled and solidified, and pelletized; and a method which includes discharging the resin in a molten state from the final polymerizer, cooling and solidifying the resin in a strand form, temporarily pelletizing the resin, thereafter feeding the resin to a single- or twin-screw extruder again, melt-extruding the resin, and then cooling, solidifying, and pelletizing the resin.

During such operations, residual monomers can be removed by volatilization under vacuum within the extruder. It is also possible to add generally known additives such as a heat stabilizer, neutralizing agent, ultraviolet absorber, release agent, colorant, antistatic agent, slip agent, lubricant, plasticizer, compatibilizing agent, and flame retardant and knead the mixture within the extruder.

The temperature to be used for melt kneading in the extruder depends on the glass transition temperature and molecular weight of the polycarbonate resin (A). However, the melt kneading temperature is generally 150-300°C, preferably 200-270°C, more preferably 230-260°C. In the case where the melt kneading temperature is lower than 150°C, the polycarbonate resin (A) has a high melt viscosity and imposes an increased load on the extruder, resulting in a decrease in productivity. In the case where the melt kneading temperature is higher than 300°C, the polycarbonate thermally deteriorates considerably, resulting in a decrease in mechanical strength due to the decrease in molecular weight and further resulting in coloring and gas evolution.

When the polycarbonate resin (A) to be used in the invention is produced, it is desirable to dispose a filter in order to prevent inclusion of foreign matter. The position where a filter is disposed preferably is on the downstream side of the extruder. The rejection size (opening size) of the filter is preferably 100 μm or smaller in terms of 99% removal filtration accuracy. Especially when the resin is for use in film applications or the like for which inclusion of minute foreign particles should be avoided, the opening size of the filter is preferably 40 μm or smaller, more preferably 10 μm or smaller.

From the standpoint of preventing inclusion of foreign matter from occurring after extrusion, it is desirable that the polycarbonate resin (A) to be used in the invention should be extruded in a clean room having a cleanliness preferably higher than class 7 defined in JIS B 9920 (2002), more preferably higher than class 6.

Furthermore, for cooling and pelletizing the extruded polycarbonate resin, it is preferred to use a cooling method such as air cooling or water cooling. It is desirable that air from which airborne foreign matter has been removed beforehand with a high-efficiency particulate air filter or the like should be used for the air cooling to prevent airborne foreign matter from adhering again. In the case of conducting water cooling, it is desirable to use water from which metallic substances have been removed with an ion-exchange resin or the like and from which foreign matter has been removed with a filter. It is preferred that the filter to be used should have an opening size of 10-0.45 μm in terms of 99% removal filtration accuracy.

The molecular weight of the thus-obtained polycarbonate resin (A) to be used in the invention can be expressed in terms of reduced viscosity. The reduced viscosity thereof is generally 0.30 dL/g or higher, preferably 0.35 dL/g or higher. The upper limit of the reduced viscosity thereof may be 1.20 dL/g or less and is more preferably 1.00 dL/g or less, even more preferably 0.80 dL/g or less.

So long as the reduced viscosity of the polycarbonate resin (A) is not less than the lower limit, the polycarbonate resin (A) gives molded articles having sufficient mechanical strength. Such reduced viscosities hence are preferred. So long as the reduced viscosity thereof is not higher than the upper limit, this polycarbonate resin (A) is prevented from showing poor flowability during molding, resulting in improvements in productivity and moldability.

Incidentally, the reduced viscosity of a polycarbonate is determined by preparing a solution thereof having a polycarbonate concentration precisely adjusted to 0.6 g/dL using methylene chloride as a solvent and measuring the viscosity of the solution with a Ubbelohde viscometer at a temperature of 20.0±0.1°C.

In the polycarbonate resin (A) to be used in the invention, the lower limit of the concentration of the end group represented by the following formula (6) is generally 20 μeq/g or higher, preferably 40 μeq/g or higher, especially preferably 50 μeq/g or higher. The upper limit thereof is generally 160 μeq/g or less, preferably 140 μeq/g or less, especially preferably 100 μeq/g or less.

In the case where the concentration of the end group represented by the following formula (6) is too high, there is a possibility that even when the polycarbonate resin has a satisfactory hue immediately after polymerization or during molding, the high end group concentration might result in a hue deterioration through exposure to ultraviolet rays. Conversely, in the case where the concentration thereof is too low, there is a possibility that this polycarbonate resin might have reduced thermal stability.

Examples of methods for regulating the concentration of the end group represented by the following formula (6) include: to regulate the molar proportions of the starting materials, i.e., at least one dihydroxy compound including the dihydroxy compound to be used for the invention and a carbonic diester represented by the formula (5); and to control factors during the transesterification reaction, such as the kind and amount of a catalyst, polymerization pressure, and polymerization temperature.

[Chem. 7]

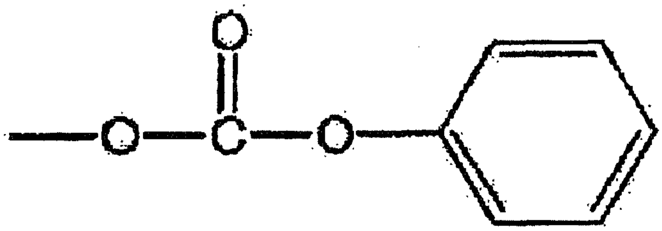

(6)

When the number of moles of the H bonded to the aromatic rings of the polycarbonate resin (A) to be used in the invention is expressed by C and the number of moles of the H bonded to the part other than the aromatic rings is expressed by D, then the proportion of the number of moles of the H bonded to the aromatic rings to the number of moles of all H is expressed by C/(C+D). Since there is a possibility that the aromatic rings, which have ultraviolet-absorbing ability, might affect light resistance as stated above, it is preferred that C/(C+D) should be 0.1 or less, more preferably 0.05 or less, even more preferably 0.02 or less, especially preferably 0.01 or less. The value of C/(C+D) can be determined by $^1$H NMR spectroscopy.

The polycarbonate resin according to the invention can be formed into molded objects by generally known techniques such as injection molding, extrusion molding, and compression molding.

Before the polycarbonate resin (A) to be used in the invention is molded by various molding techniques, additives such as a heat stabilizer, neutralizing agent, ultraviolet absorber, release agent, colorant, antistatic agent, slip agent, lubricant, plasticizer, compatibilizing agent, and flame retardant can be incorporated into the polycarbonate resin (A) according to need by means of a tumbling mixer, supermixer, floating mixer, twin-cylinder mixer, Nauta mixer, Banbury mixer, extruder, or the like.

The polycarbonate resin (A) has a glass transition temperature of preferably 75-105°C, more preferably 80-105°C, even more preferably 85-105°C. By using the polycarbonate resin (A) having a glass transition temperature within that range, molded articles having excellent heat resistance can be provided.

<Aromatic Polycarbonate Resin (B)>

The aromatic polycarbonate resin (B) to be used in the invention can be any conventionally known aromatic polycarbonate resin so long as this polycarbonate resin is made up of constituent units derived from one or more dihydroxy compounds and linked to each other through a carbonate bond and has aromatic rings in the structure thereof. The aromatic polycarbonate resin (B) may contain constituent units derived from a dihydroxy compound having the portion represented by the formula (1). It is preferred that the aromatic polycarbonate resin (B) should be a polycarbonate resin in which constituent units each derived from a dihydroxy compound having an aromatic ring are contained in a largest proportion among all constituent units each derived from a dihydroxy compound. In this polycarbonate resin, the proportion of the constituent units each derived from a dihydroxy compound having an aromatic ring to all constituent units each derived from a dihydroxy compound is more preferably 50% by mole or more, even more preferably 70% by mole or more, especially preferably 90% by mole or more. It is, however, noted that when the aromatic polycarbonate resin (B) to be used is a polycarbonate resin which contains constituent units derived from a dihydroxy compound having the portion represented by the formula (1), then this polycarbonate resin differs in structure from the polycarbonate resin (A).

The aromatic polycarbonate resin (B) to be used in the invention may be a homopolymer or a copolymer. The aromatic polycarbonate resin (B) may have a branched structure.

More specifically, the aromatic polycarbonate resin (B) may be a polycarbonate resin having a repeating structure represented by the following formula (7).

[Chem. 8]

$$\{ O - Ar^1 - X - Ar^2 - OC(=O) \} \qquad (7)$$

In the formula (7), $Ar^1$ and $Ar^2$ each independently represent an arylene group which may have one or more substituents, and X represents a single bond or a divalent organic group.

The arylene group which may have one or more substituents is not particularly limited so long as the group is an arylene group. However, the arylene group preferably is an arylene group including up to 3 aromatic rings, and more preferably is a phenylene group. Examples of the substituents which may be possessed independently by $Ar^1$ and $Ar^2$ include alkyl groups which have 1-10 carbon atoms and may have one or more substituents, alkoxy groups which have 1-10 carbon atoms and may have one or more substituents, halogen radicals, halogenated alkyl groups having 1-10

carbon atoms, or aromatic groups which have 6-20 carbon atoms and may have one or more substituents. Preferred of these substituents are alkyl groups which have 1-10 carbon atoms and may have one or more substituents or aromatic groups which have 6-20 carbon atoms and may have one or more substituents. More preferred are alkyl groups having 1-10 carbon atoms. Especially preferred is methyl.

Examples of the divalent organic group include chain-structure alkylene groups which have 1-6 carbon atoms and may have one or more substituents, chain-structure alkylidene groups which have 1-6 carbon atoms and may have one or more substituents, cyclic-structure alkylene groups which have 3-6 carbon atoms and may have one or more substituents, and cyclic-structure alkylidene groups which have 3-6 carbon atoms and may have one or more substituents, and further include -O-, -S-, -CO-, or $-SO_2-$. The substituents possessed by the chain-structure alkylene groups having 1-6 carbon atoms preferably are aryl groups, and phenyl is especially preferred.

The constituent units which are derived from one or more dihydroxy compounds and which constitute the aromatic polycarbonate resin (B) to be used in the invention each is a unit formed by removing the hydrogen atoms from the hydroxyl groups of a dihydroxy compound. Examples of the corresponding dihydroxy compounds include the following. Biphenyl compounds such as 4,4'-biphenol, 2,4'-biphenol, 3,3'-dimethyl-4,4' -dihydroxy-1,1' -biphenyl, 3,3'-dimethyl-2,4'-dihydroxy-1,1'-biphenyl, 3,3'-di(t-butyl)-4,4'-dihydroxy-1,1'-biphenyl, 3,3',5,5'-tetramethyl-4,4'-dihydroxy-1,1'-biphenyl, 3,3',5,5'-tetra(t-butyl)-4,4'-dihydroxy-1,1'-biphenyl, and 2,2',3,3',5,5'-hexamethyl-4,4'-dihydroxy-1,1'-biphenyl.

Bisphenol compounds such as bis(4-hydroxy-3,5-dimethylphenyl)methane, bis(4-hydroxyphenyl)methane, bis (4-hydroxy-3-methylphenyl)methane, 1,1-bis(4-hydroxyphenyl)ethane, 1,1-bis(4-hydroxyphenyl)propane, 2,2-bis(4-hydroxyphenyl)propane, 2,2-bis(4-hydroxy-3-methylphenyl)propane, 2,2-bis(4-hydroxyphenyl)butane, 2,2-bis(4-hydroxyphenyl)pentane, 2,2-bis(4-hydroxyphenyl)-3-methylbutane, 2,2-bis(4-hydroxyphenyl)hexane, 2,2-bis(4-hydroxyphenyl)-4-methylpentane, 1,1-bis(4-hydroxyphenyl)cyclopentane, 1,1-bis(4-hydroxyphenyl)cyclohexane, bis(3-phenyl-4-hydroxyphenyl)methane, 1,1-bis(3-phenyl-4-hydroxyphenyl)ethane, 1,1-bis(3-phenyl-4-hydroxyphenyl)propane, 2,2-bis (3-phenyl-4-hydroxyphenyl)propane, 1,1-bis(4-hydroxy-3-methylphenyl)ethane, 2,2-bis(4-hydroxy-3-ethylphenyl)propane, 2,2-bis(4-hydroxy-3-isopropylphenyl)propane, 2,2-bis(4-hydroxy-3-sec-butylphenyl)propane, 1,1-bis(4-hydroxy-3,5-dimethylphenyl)ethane, 2,2-bis(4-hydroxy-3,5-dimethylphenyl)propane, 1,1-bis(4-hydroxy-3,6-dimethylphenyl) ethane, bis(4-hydroxy-2,3,5-trimethylphenyl)methane, 1,1-bis(4-hydroxy-2,3,5-trimethylphenyl)ethane, 2,2-bis(4-hydroxy-2,3,5-trimethylphenyl)propane, bis(4-hydroxy-2,3,5-trimethylphenyl)phenylmethane, 1,1-bis(4-hydroxy-2,3,5-trimethylphenyl)phenylethane, 1,1-bis(4-hydroxy-2,3,5-trimethylphenyl)cyclohexane, bis(4-hydroxyphenyl)phenylmethane, 1,1-bis(4-hydroxyphenyl)-1-phenylethane, 1,1-bis(4-hydroxyphenyl)-1-phenylpropane, bis(4-hydroxyphenyl) diphenylmethane, bis(4-hydroxyphenyl)dibenzylmethane, 4,4'-[1,4-phenylenebis(1-methylethylidene)]bis[phenol], 4,4'-[1,4-phenylenebismethylene]bis[phenol], 4,4'-[1,4-phenylenebis(1-methylethylidene)]bis[2,6-dimethylphenol], 4,4'-[1,4-phenylenebismethylene]bis[2,6-dimethylphenol], 4,4'-[1,4-phenylenebismethylene]bis[2,3,6-trimethylphenol], 4,4'-[1,4-phenylenebis(1-methylethylidene)]bis[2,3,6-trimethylphenol], 4,4'-[1,3-phenylenebis(1-methylethylidene)]bis [2,3,6-trimethylphenol], 4,4'-dihydroxydiphenyl ether, 4,4'-dihydroxydiphenyl sulfone, 4,4'-dihydroxydiphenyl sulfide, 3,3',5,5'-tetramethyl-4,4'-dihydroxydiphenyl ether, 3,3',5,5'-tetramethyl-4,4'-dihydroxydiphenyl sulfone, 3,3',5,5'-tetramethyl-4,4'-dihydroxydiphenyl sulfide, phenolphthalein, 4,4'-[1,4-phenylenebis(1-methylvinylidene)]bisphenol, 4,4'-[1,4-phenylenebis(1-methylvinylidene)]bis[2-methylphenol], (2-hydroxyphenyl)(4-hydroxyphenyl)methane, (2-hydroxy-5-methylphenyl)(4-hydroxy-3 -methylphenyl)methane, 1,1-(2-hydroxyphenyl)(4-hydroxyphenyl)ethane, 2,2-(2-hydroxyphenyl)(4-hydroxyphenyl)propane, and 1,1-(2-hydroxyphenyl)(4-hydroxyphenyl)propane.

Halogenated bisphenol compounds such as 2,2-bis(3,5-dibromo-4-hydroxyphenyl)propane and 2,2-bis(3,5-dichloro-4-hydroxyphenyl)propane.

Preferred of these dihydroxy compounds are bisphenol compounds in which the phenol analogue moieties are linked to each other through an alkylidene group, such as bis(4-hydroxy-3,5-dimethylphenyl)methane, bis(4-hydroxyphenyl) methane, bis(4-hydroxy-3-methylphenyl)methane, 1,1-bis(4-hydroxyphenyl)ethane, 2,2-bis(4-hydroxyphenyl)propane, 2,2-bis(4-hydroxy-3-methylphenyl)propane, 2,2-bis(4-hydroxy-3,5-dimethylphenyl)propane, 1,1-bis(4-hydroxyphenyl) cyclohexane, bis(4-hydroxyphenyl)phenylmethane, 1,1-bis(4-hydroxyphenyl)-1-phenylethane, 1,1-bis(4-hydroxyphenyl)-1-phenylpropane, bis(4-hydroxyphenyl)diphenylmethane, 2-hydroxyphenyl(4-hydroxyphenyl)methane, and 2,2-(2-hydroxyphenyl)(4-hydroxyphenyl)propane.

Especially preferred of these are the bisphenol compounds in which the alkylidene group has up to 6 carbon atoms, such as bis(4-hydroxyphenyl)methane, bis(4-hydroxy-3-methylphenyl)methane, bis(4-hydroxy-3,5-dimethylphenyl)methane, 2,2-bis(4-hydroxyphenyl)propane, 2,2-bis(4-hydroxy-3-methylphenyl)propane, 2,2-bis(4-hydroxy-3,5-dimethylphenyl)propane, and 1,1-bis(4-hydroxyphenyl)cyclohexane.

For producing the aromatic polycarbonate resin (B) to be used in the invention, any conventionally known process, such as a phosgene method, transesterification method, or pyridine method, may be used. A process for producing the aromatic polycarbonate resin (B) by a transesterification method is explained below as an example. The transesterification method is a production method in which a dihydroxy compound and a carbonic diester are subjected to melt transesterification polycondensation in the presence of a basic catalyst and an acidic substance for neutralizing the basic catalyst. Examples of the dihydroxy compound include the biphenyl compounds and bisphenol compounds

shown above as examples.

Representative examples of the carbonic diester include diaryl carbonates such as diphenyl carbonate, ditolyl carbonate, bis(chlorophenyl) carbonate, m-cresyl carbonate, dinaphthyl carbonate, and bis(biphenyl) carbonate and dialkyl carbonates such as diethyl carbonate, dimethyl carbonate, dibutyl carbonate, and dicyclohexyl carbonate. It is especially preferred to use diphenyl carbonate among these.

From the standpoint of a balance between dynamic properties and moldability, the viscosity-average molecular weight of the aromatic polycarbonate resin (B) to be used in the invention is preferably 23,000 or higher, more preferably 25,000 or higher, especially preferably 27,000 or higher, and is preferably 100,000 or less, more preferably 70,000 or less, even more preferably 50,000 or less, especially preferably 30,000 or less.

The reduced viscosity of the aromatic polycarbonate resin (B) is generally 0.50 dL/g or higher, preferably 0.52 dL/g or higher, more preferably 0.55 dL/g or higher, and is preferably 0.65 dL/g or less, more preferably 0.61 dL/g or less. The reduced viscosity of a polycarbonate is determined by preparing a solution thereof having a polycarbonate concentration precisely adjusted to 0.60 g/dL using methylene chloride as a solvent and measuring the viscosity of the solution at a temperature of 20.0±0.1°C.

In the invention, one aromatic polycarbonate resin (B) may be used alone or a mixture of two or more aromatic polycarbonate resins (B) may be used.

<Polycarbonate Resin Composition>

The polycarbonate resin composition of the invention is a polycarbonate resin composition which includes a polycarbonate resin (A) containing constituent units (a) derived from a dihydroxy compound having the portion represented by the following formula (1) as part of the structure thereof and an aromatic polycarbonate resin (B) having a reduced viscosity of 0.50 dL/g or higher. It is, however, noted that the case where the portion represented by the following formula (1) is part of $-CH_2-O-H$ is excluded.

[Chem. 9]

$$\{CH_2-O\} \qquad (1)$$

The polycarbonate resin composition of the invention is characterized in that a polycarbonate resin (A) containing constituent units derived from a dihydroxy compound (a) having the portion represented by the formula (1) as part of the structure thereof and an aromatic polycarbonate resin (B) having a reduced viscosity of 0.50 dL/g or higher are simultaneously contained therein. The proportions of the polycarbonate resin (A) and the aromatic polycarbonate resin (B) are not particularly limited. It is, however, preferred that the polycarbonate resin (A) and the aromatic polycarbonate resin (B) should be contained in a weight ratio of preferably from 1:99 to 99:1, more preferably from 5:95 to 95:5, especially from 10:90 to 90:10. When the composition contains a polycarbonate resin which can be regarded as either a polycarbonate resin (A) or an aromatic polycarbonate resin (B), then this polycarbonate resin may be taken at will as a polycarbonate resin (A) or an aromatic polycarbonate resin (B) and regulated so as to be contained in a proportion within that range. In order to sufficiently obtain the effects of the invention, the polycarbonate resin (A) and the aromatic polycarbonate resin (B) are used in such amounts that at least one polycarbonate resin selected from the polycarbonate resins (A) and (B) accounts for preferably 20 parts by weight or more, more preferably 35 parts by weight or more, even more preferably 50 parts by weight or more, especially preferably 75 parts by weight or more, of 100 parts by weight of the polycarbonate resin composition. From the standpoint of obtaining the effects of the invention, it is especially preferred that the polycarbonate resin ingredients to be used in the polycarbonate resin composition of the invention should be wholly accounted for by polycarbonate resins selected from the polycarbonate resin (A) and the aromatic polycarbonate resin (B).

In the case where the proportion of the aromatic polycarbonate resin (B) in the polycarbonate resin composition is too high, this composition tends to have an increased value of yellowness index (YI) after the sunshine weatherometer irradiation test which will be described later. In the case where the proportion of the aromatic polycarbonate resin (B) in the polycarbonate resin composition is too low, the initial YI value tends to be large.

It is preferred that the polycarbonate resin composition according to the invention should have a single glass transition temperature from the standpoint of enabling the polycarbonate resin composition and molded articles of the polycarbonate resin to retain transparency.

<Resins other than Polycarbonate Resins>

The polycarbonate resin composition and polycarbonate resin molded article of the invention can contain not only resins other than polycarbonate resins but also additives which are not resins. Examples of resins which are not polycarbonate resins and can be incorporated for the purpose of further improving or regulating moldability or other

properties include resins such as polyester resins, polyethers, polyamides, polyolefins, and poly(methyl methacrylate) and rubbery modifiers such as core-shell type, graft type, or linear random and block copolymers. With respect to the amount of such resins to be incorporated other than polycarbonate resins, it is preferred to incorporate such other resins in an amount of 1-30 parts by weight per 100 parts by weight of the mixture of the polycarbonate resin (A) and aromatic polycarbonate resin (B) to be used in the invention. The amount of such other resins to be incorporated is more preferably 3-20 parts by weight, even more preferably 5-10 parts by weight.

<Heat Stabilizer>

A heat stabilizer can be incorporated into the polycarbonate resin composition and polycarbonate resin molded article of the invention in order to prevent the composition from decreasing in molecular weight and deteriorating in hue during molding. Examples of the heat stabilizer include phosphorous acid, phosphoric acid, phosphonous acid, phosphonic acid, and esters thereof. Specific examples thereof include triphenyl phosphite, tris(nonylphenyl) phosphite, tris (2,4-di-tert-butylphenyl) phosphite, tridecyl phosphite, trioctyl phosphite, trioctadecyl phosphite, didecyl monophenyl phosphite, dioctyl monophenyl phosphite, diisopropyl monophenyl phosphite, monobutyl diphenyl phosphite, monodecyl diphenyl phosphite, monooctyl diphenyl phosphite, bis(2,6-di-tert-butyl-4-methylphenyl) pentaerythritol diphosphite, 2,2-methylenebis(4,6-di-tert-butylphenyl) octyl phosphite, bis(nonylphenyl) pentaerythritol diphosphite, bis(2,4-di-tert-butylphenyl) pentaerythritol diphosphite, distearyl pentaerythritol diphosphite, tributyl phosphate, triethyl phosphate, trimethyl phosphate, triphenyl phosphate, diphenyl mono-o-xenyl phosphate, dibutyl phosphate, dioctyl phosphate, diisopropyl phosphate, tetrakis(2,4-di-tert-butylphenyl) 4,4'-biphenylenediphosphinate, dimethyl benzenephosphonate, diethyl benzenephosphonate, and dipropyl benzenephosphonate. Preferred of these are trisnonylphenyl phosphite, trimethyl phosphate, tris(2,4-di-tert-butylphenyl) phosphite, bis(2,4-di-tert-butylphenyl) pentaerythritol diphosphite, bis(2,6-di-tert-butyl-4-methylphenyl) pentaerythritol diphosphite, and dimethyl benzenephosphonate.

One of these heat stabilizers may be used alone, or two or more thereof may be used in combination. With respect to the amount of the heat stabilizer to be incorporated, it is preferred to incorporate the heat stabilizer in an amount of 0.0001-1 part by weight per 100 parts by weight of the mixture of the polycarbonate resin (A) and aromatic polycarbonate resin (B) to be used in the invention. The amount of the heat stabilizer to be incorporated is more preferably 0.0005-0.5 parts by weight, even more preferably 0.001-0.2 parts by weight. By incorporating a heat stabilizer in an amount within that range, the resins can be prevented from decreasing in molecular weight or discoloring, while preventing the additive from bleeding or arousing other troubles.

<Antioxidant>

A generally known antioxidant can be incorporated into the polycarbonate resin composition and polycarbonate resin molded article of the invention for the purpose of preventing oxidation. Examples of the antioxidant include one or more of pentaerythritol tetrakis(3-mercaptopropionate), pentaerythritol tetrakis(3-laurylthiopropionate), glycerol 3-stearylthiopropionate, triethylene glycol bis[3-(3-tert-butyl-5-methyl-4-hydroxyphenyl)propionate], 1,6-hexanediol bis [3-(3,5-di-tert-butyl-4-hydroxyphenyl)propionate], pentaerythritol tetrakis[3-(3,5-di-tert-butyl-4-hydroxyphenyl)propionate], octadecyl 3-(3,5-di-tert-butyl-4-hydroxyphenyl)propionate, 1,3,5-trimethyl-2,4,6-tris(3,5-di-tert-butyl-4-hydroxyphenyl)benzene, N,N-hexamethylenebis(3,5-di-tert-butyl-4-hydroxyhydrocinnamamide), diethyl 3,5-di-tert-butyl-4-hydroxybenzylphosphonate, tris(3,5-di-tert-butyl-4-hydroxybenzyl) isocyanurate, tetrakis(2,4-di-tert-butylphenyl) 4,4'-biphenylenediphosphinate, 3,9-bis {1,1-dimethyl-2-[β-(3-tert-butyl-4-hydroxy-5-methylphenyl)propionyloxy]ethyl}-2,4,8,10-tetraoxaspiro(5,5)undecane, and the like. With respect to the amount of the antioxidant to be incorporated, it is preferred to incorporate the antioxidant in an amount of 0.0001-1 part by weight per 100 parts by weight of the mixture of the polycarbonate resin (A) and aromatic polycarbonate resin (B) to be used in the invention. The amount of the antioxidant to be incorporated is more preferably 0.0005-0.5 parts by weight, even more preferably 0.001-0.2 parts by weight. By incorporating an antioxidant in an amount within that range, the resins can be prevented from oxidatively deteriorating, while preventing the antioxidant from bleeding to the surfaces of the molded articles and from reducing the mechanical properties of various molded articles.

<Ultraviolet Absorber>

An ultraviolet absorber can be incorporated for the purpose of further improving the weatherability of the polycarbonate resin composition and polycarbonate resin molded article of the invention. Examples of the ultraviolet absorber include 2-(2'-hydroxy-5'-tert-octylphenyl)benzotriazole, 2-(3-tert-butyl-5-methyl-2-hydroxyphenyl)-5-chlorobenzotriazole, 2-(5-methyl-2-hydroxyphenyl)benzotriazole, 2-[2-hydroxy-3,5-bis(α,α-dimethylbenzyl)phenyl]-2H-benzotriazole, 2,2'-methylenebis(4-cumyl-6-benzotriazolephenyl), and 2,2'-p-phenylenebis(1,3-benzoxazin-4-one). Ultraviolet absorbers having a melting point in the range of, in particular, 120-250°C are preferred. When an ultraviolet absorber having

a melting point of 120°C or higher is used, the surface dulling of molded articles which is caused by a gas is mitigated. Specifically, use is made of a benzotriazole-based ultraviolet absorber such as 2-(2'-hydroxy-5'-methylphenyl)benzotriazole, 2-(2'-hydroxy-3'-tert-butyl-5'-methylphenyl)-5-chlorobenzotriazole, 2-[2'-hydroxy-3'-(3",4",5",6"-tetrahydrophthalimidomethyl)-5'-methylphenyl]benzotriazole, 2,2-methylenebis[4-(1,1,3,3-tetramethylbutyl)-6-(2H-benzotriazol-2-yl) phenol, or 2-(2-hydroxy-3,5-dicumylphenyl)benzotriazole. Especially preferred of these are 2-(2-hydroxy-3,5-dicumylphenyl)benzotriazole and 2,2-methylenebis[4-(1,1,3,3-tetramethylbutyl)-6-(2H-benzotriazol-2-yl)phenol. One of these ultraviolet absorbers may be used alone, or two or more thereof may be used in combination. With respect to the amount of the ultraviolet absorber to be incorporated, it is preferred to incorporate the ultraviolet absorber in an amount of 0.0001-1 part by weight per 100 parts by weight of the mixture of the polycarbonate resin (A) and aromatic polycarbonate resin (B) to be used in the invention. The amount of the ultraviolet absorber to be incorporated is more preferably 0.0005-0.5 parts by weight, even more preferably 0.001-0.2 parts by weight. By an ultraviolet absorber in an amount within that range, the weatherability of the resin composition and various molded articles can be improved while preventing the ultraviolet absorber from bleeding to the surfaces of the molded articles and from reducing the mechanical properties of the molded articles.

<Hindered-Amine Light Stabilizer>

A hindered-amine light stabilizer can be incorporated for the purpose of further improving the weatherability of the polycarbonate resin composition and polycarbonate resin molded article of the invention. Examples of the hindered-amine light stabilizer include bis(2,2,6,6-tetramethyl-4-piperidyl) sebacate, bis(1,2,2,6,6-pentamethyl-4-piperidyl) sebacate, poly[[6-(1,1,3,3-tetramethylbutyl)amino-1,3,5-triazine-2,4-diyl][(2,2,6,6-tetramethyl-4-piperidyl)imino]hexamethylene[(2,2,6,6-tetramethyl-4-piperidyl)imino]], N,N'-bis(3-aminopropyl)ethylenediamine/2,4-bis[N-butyl-N-(1,2,2,6,6-pentamethyl-4-piperidylamino)-6-chloro-1,3,5-triazine condensates, and polycondensates of dibutylamine, 1,3,5-triazine, or N,N'-bis(2,2,6,6)-tetramethyl-4-piperidyl-1,6-hexamethylenediamine with N-(2,2,6,6-tetramethyl-4-piperidyl)butylamine. Preferred of these are bis(2,2,6,6-tetramethyl-4-piperidyl) sebacate and bis(1,2,2,6,6-pentamethyl-4-piperidyl) sebacate.

With respect to the amount of the hindered-amine light stabilizer to be incorporated, it is preferred to incorporate the hindered-amine light stabilizer in an amount of 0.001-1 part by weight per 100 parts by weight of the mixture of the polycarbonate resin (A) and aromatic polycarbonate resin (B) to be used in the invention. The amount of the hindered-amine light stabilizer to be incorporated is more preferably 0.005-0.5 parts by weight, especially preferably 0.01-0.2 parts by weight. By incorporating a hindered-amine light stabilizer in an amount within that range, the weatherability of various molded articles obtained by molding the polycarbonate resin composition of the invention can be improved while preventing the hindered-amine light stabilizer from bleeding to the surface of the polycarbonate resin composition and from reducing the mechanical properties of the molded articles.

<Release Agent>

It is preferred that the polycarbonate resin composition of the invention should further contain a release agent from the standpoint that the composition shows further improved releasability from the mold during melt molding. Examples of the release agent include higher fatty acids, higher fatty acid esters of mono- or polyhydric alcohols, natural animal waxes such as bees wax, natural vegetable waxes such as carnauba wax, natural petroleum waxes such as paraffin wax, natural coal waxes such as montan wax, olefin waxes, silicone oils, and organopolysiloxanes. Especially preferred are higher fatty acids and higher fatty acid esters of mono- or polyhydric alcohols.

The higher fatty acid esters preferably are partial or complete esters of substituted or unsubstituted, mono- or polyhydric alcohols having 1-20 carbon atoms with substituted or unsubstituted, saturated fatty acids having 10-30 carbon atoms. Examples of the partial or complete esters of mono- or polyhydric alcohols with saturated fatty acids include stearic monoglyceride, stearic diglyceride, stearic triglyceride, stearic acid monosorbitate, stearyl stearate, behenic monoglyceride, behenyl behenate, pentaerythritol monostearate, pentaerythritol tetrastearate, pentaerythritol tetrapelargonate, propylene glycol monostearate, stearyl stearate, palmityl palmitate, butyl stearate, methyl laurate, isopropyl palmitate, biphenyl biphenate, sorbitan monostearate, 2-ethylhexyl stearate, and ethylene glycol distearate. Preferred of these are stearic monoglyceride, stearic triglyceride, pentaerythritol tetrastearate, and behenyl behenate.

The higher fatty acids preferably are substituted or unsubstituted, saturated fatty acids having 10-30 carbon atoms. Examples of such saturated fatty acids include myristic acid, lauric acid, palmitic acid, stearic acid, and behenic acid. One of these release agents may be used alone, or a mixture of two or more thereof may be used. The content of the release agent, per 100 parts by weight of the mixture of the polycarbonate resin (A) and aromatic polycarbonate resin (B) to be used in the invention, is preferably 0.0001 part by weight or more, more preferably 0.01 part by weight or more, especially preferably 0.1 part by weight or more, and is preferably 2 parts by weight or less, more preferably 1 part by weight or less, especially preferably 0.5 parts by weight or less.

The time at which the release agent is to be incorporated into the polycarbonate resin composition in this

embodiment and methods for the addition are not particularly limited. Examples of the time of addition include the time when polymerization reaction is completed, in the case where a polycarbonate resin was produced by a transesterification method. Examples thereof further include, regardless of polymerization method: the time when a polycarbonate resin is in a molten state, for example, during kneading of the polycarbonate resin and other ingredients; and the time when a solid-state polycarbonate resin in the form of pellets, powder, or the like is blended with other ingredients and kneaded by means of an extruder or the like. Examples of addition methods include: a method in which the release agent is directly added, through mixing or kneading, to a polycarbonate resin; and a method in which the release agent is added in the form of a high-concentration master batch produced using a small amount of a polycarbonate resin, another resin, etc. and the release agent.

<Molding>

In this embodiment, the polycarbonate resin composition described above is molded to obtain a polycarbonate resin molded article. Methods of molding for obtaining the polycarbonate resin molded article are not particularly limited. Examples thereof include: a method in which raw materials including the polycarbonate resin (A) and the aromatic polycarbonate resin (B) and optionally further including other resins, additives, etc. are directly mixed together and the mixture is introduced into an extruder or an injection molding machine and molded; and a method in which the raw materials are melt-mixed by means of a twin-screw extruder and extruded into strands to produce pellets and the pellets are introduced into an extruder or an injection molding machine and molded. Since the polycarbonate resin molded article of the invention has excellent light resistance and transparency, the resin molded article can be used in applications such as noise insulation walls for roads, arcade ceiling sheets, arcade ceiling plates, roofing materials for facilities, and wall materials for facilities.

It is preferred that the polycarbonate resin composition of the invention should be transparent, depending on the properties required in the intended application thereof. The transparency thereof can be evaluated, for example, based on the total light transmittance of a molded object formed therefrom. The polycarbonate resin composition having a high total light transmittance is preferred. The total light transmittance of the polycarbonate resin composition of the invention, which is determined by examining a molded object (thickness, 3 mm) formed from the composition, is preferably 60% or higher, more preferably 70% or higher, especially preferably 80% or higher.

The polycarbonate resin composition of the invention has high weatherability. The weatherability thereof can be evaluated, for example, through an irradiation treatment with a sunshine carbon arc lamp. More specifically, using a specific apparatus, specific filter, etc. as will be described later and using a sunshine carbon arc lamp at a discharge voltage of 50 V and a discharge current of 60 A, a sample is irradiated for 500 hours with light mainly having wavelengths of 300-1,100 nm at a black panel temperature of 63°C in an environment having a relative humidity of 50% and a rainfall spray period per hour of 12 minutes. The weatherability of the composition can be thus evaluated.

After the molded object (thickness, 3 mm) formed from the polycarbonate resin composition of the invention has been irradiated with light for 500 hours using the sunshine carbon arc lamp, the total light transmittance thereof is preferably 85% or higher. The upper limit thereof is 99% or less. Furthermore, the difference in yellowness index (YI) value between before and after the irradiation treatment is preferably 10 or less, more preferably 8 or less, especially preferably 6 or less.

## Examples

The invention will be explained below in more detail by reference to Examples. However, the invention should not be construed as being limited by the following Examples unless the invention departs from the spirit thereof.
In the following, properties of polycarbonate resins, polycarbonate resin compositions, molded articles, etc. were evaluated by the following methods.

### (1) Measurement of Reduced Viscosity

A sample of a polycarbonate resin composition was dissolved using methylene chloride as a solvent to prepare a polycarbonate solution having a concentration of 0.6 g/dL. Using a Ubbelohde viscometer manufactured by Moritomo Rika Kogyo, a measurement was made at a temperature of 20.0±0.1 °C. The relative viscosity ηrel was determined from the flow-down time of the solvent to and the flow-down time of the solution t using the following equation.

$$\eta rel = t/t_0$$

The specific viscosity ηsp was determined from the relative viscosity using the following equation.

$$\eta sp = (\eta - \eta_0)/\eta_0 = \eta rel - 1$$

The specific viscosity was divided by the concentration c (g/dL) to determine the reduced viscosity ηsp/c. The larger the value thereof, the higher the molecular weight.

(2) Measurement of Total Light Transmittance

In accordance with JIS K7105 (1981), an injection-molded piece was examined for total light transmittance using a hazeometer (NDH2000, manufactured by Nippon Denshoku Kogyo K.K.) and illuminant D65.

(3) Tensile Test

A tensile test was conducted in accordance with ISO 527 (1993) to measure the nominal strain at break.

(4) Deflection Temperature under Load

Deflection temperature under load was measured under a load of 1.80 MPa in accordance with ISO 75 (2004).

<Polycarbonate Resin (A)>

PC1:

(Constituent units derived from isosorbide)/(constituent units derived from 1,4-cyclohexanedimethanol) = 40/60 mol%; reduced viscosity, 0.63 dL/g

PC2:

(Constituent units derived from isosorbide)/(constituent units derived from 1,4-cyclohexanedimethanol) = 70/30 mol%; reduced viscosity, 0.51 dL/g

<Aromatic Polycarbonate Resin (B)>

PC3:
Novarex M7027BF, manufactured by Mitsubishi Engineering-Plastics Corp.; reduced viscosity, 0.56 dL/g
PC4:
Novarex 7022J, manufactured by Mitsubishi Engineering-Plastics Corp.; reduced viscosity, 0.47 dL/g

(EXAMPLE 1)

PC1 was dry-blended with PC3 in a weight ratio of 80:20, and the mixture was extruded at a resin temperature of 250°C using a twin-screw extruder (TEX30HSS-32) manufactured by The Japan Steel Works, Ltd. The extrudate was solidified by cooling with water and then pelletized with a rotary cutter. The pellets were dried at 80°C for 10 hours in a nitrogen atmosphere and subsequently fed to an injection molding machine (Type J75EII, manufactured by The Japan Steel Works, Ltd.) to mold injection-molded plates (60 mm (width) × 60 mm (length) × 3 mm (thickness)) and ISO test pieces for property measurements, under the conditions of a resin temperature of 250°C, a mold temperature of 60°C, and a molding cycle of 40 seconds. The samples obtained were subjected to the measurement of total light transmittance, tensile test, and measurement of deflection temperature under load. The results thereof are shown in Table 1.

(EXAMPLE 2)

Sample production and evaluation were conduced in the same manners as in Example 1, except that PC1 and PC3 were mixed in a weight ratio of 60:40. The results obtained are shown in Table 1.

(EXAMPLE 3)

Sample production and evaluation were conduced in the same manners as in Example 1, except that PC1 and PC3 were mixed in a weight ratio of 40:60. The results obtained are shown in Table 1.

(EXAMPLE 4)

Sample production and evaluation were conduced in the same manners as in Example 1, except that PC2 and PC3 were mixed in a weight ratio of 60:40. The results obtained are shown in Table 1.

(COMPARATIVE EXAMPLE 1)

Sample production and evaluation were conduced in the same manners as in Example 1, except that PC1 and PC4 were mixed in a weight ratio of 60:40. The results obtained are shown in Table 1.

(COMPARATIVE EXAMPLE 2)

The same evaluation as in Example 1 was conducted, except that PC1 only was dried at 70°C for 6 hours in a nitrogen atmosphere and then molded. The results obtained are shown in Table 1.

(COMPARATIVE EXAMPLE 3)

The same evaluation as in Example 1 was conducted, except that PC2 only was dried at 80°C for 6 hours in a nitrogen atmosphere and then molded. The results obtained are shown in Table 1.

[Table 1]

Table 1 Component proportions by weight and properties of polycarbonate resin compositions

| | | Example 1 | Example 2 | Example 3 | Example 4 | Comparative Example 1 | Comparative Example 2 | Comparative Example 3 |
|---|---|---|---|---|---|---|---|---|
| Polycarbonate resin (A) | PC1 | 80 | 60 | 40 | - | 60 | 100 | - |
| | PC2 | - | - | - | 60 | - | - | 100 |
| Aromatic polycarbonate resin (B) | PC3 | 20 | 40 | 60 | 40 | - | - | - |
| | PC4 | - | - | - | - | 40 | - | - |
| Total light transmittance (%) | | 89 | 89 | 87 | 5 | 90 | 90 | 91 |
| Nominal strain at break (%) | | 131 | 127 | 96 | 80 | 65 | 122 | 70 |
| Deflection temperature under load [1.80 MPa] (°C) | | 82 | 89 | 100 | 117 | 92 | 71 | 105 |
| In Table 1, "-" indicates that the material was not used. | | | | | | | | |

The results show that the polycarbonate resin compositions of the invention each are a composition which has a nominal strain at break as high as 75% or above and simultaneously has a deflection temperature under load as high as 75°C [1.80 MPa] or above. The compositions further have excellent mechanical strength. In addition, the polycarbonate resin compositions of Example 1 to Example 3 further have a total light transmittance as high as 60% or above.

While the invention has been described in detail and with reference to specific embodiments thereof, it will be apparent to one skilled in the art that various changes and modifications can be made therein without departing from the spirit and scope thereof. This application is based on a Japanese patent application filed on December 10, 2009 (Application No. 2009-280865), a Japanese patent application filed on December 18, 2009 (Application No. 2009-288107), and a Japanese patent application filed on August 20, 2010 (Application No. 2010-185060), the contents thereof being incorporated herein by reference.

## Claims

1. A polycarbonate resin composition which comprises a polycarbonate resin (A) containing constituent units derived from a dihydroxy compound (a) having the portion represented by the following formula (1) as part of the structure thereof and an aromatic polycarbonate resin (B) having a reduced viscosity of 0.50 dL/g or higher.
[Chem. 1]

$$\{CH_2\text{-}O\} \qquad (1)$$

(The case where the portion represented by the formula (1) is part of $-CH_2-O-H$ is excluded.)

2. The polycarbonate resin composition as claimed in claim 1 wherein the aromatic polycarbonate resin (B) has a viscosity-average molecular weight of 25,000 or higher.

3. The polycarbonate resin composition as claimed in claim 1 or 2 wherein the dihydroxy compound (a) is a dihydroxy compound represented by the following formula (2).

[Chem. 2]

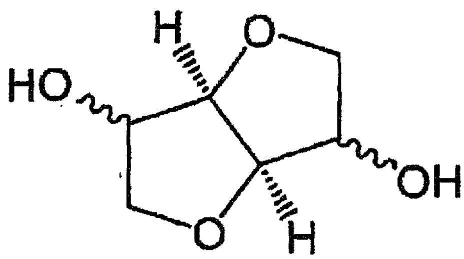

(2)

4. The polycarbonate resin composition as claimed in any one of claims 1 to 3 wherein the amount of the aromatic polycarbonate resin (B) in 100 parts by weight of the polycarbonate resin composition is 1-99 parts by weight.

5. The polycarbonate resin composition as claimed in any one of claims 1 to 4 which further contains an ultraviolet absorber in an amount of 0.0001-1 part by weight per 100 parts by weight of the mixture of the polycarbonate resin (A) and the aromatic polycarbonate resin (B).

6. The polycarbonate resin composition as claimed in any one of claims 1 to 5 which further contains a hindered amine-based light stabilizer in an amount of 0.001-1 part by weight per 100 parts by weight of the mixture of the polycarbonate resin (A) and the aromatic polycarbonate resin (B).

7. The polycarbonate resin composition as claimed in any one of claims 1 to 6 which further contains an antioxidant in an amount of 0.0001-1 part by weight per 100 parts by weight of the mixture of the polycarbonate resin (A) and the aromatic polycarbonate resin (B).

8. The polycarbonate resin composition as claimed in any one of claims 1 to 7 which further contains a release agent

in an amount of 0.0001-2 parts by weight per 100 parts by weight of the mixture of the polycarbonate resin (A) and the aromatic polycarbonate resin (B).

9. A polycarbonate resin molded article obtained by molding the polycarbonate resin composition as claimed in any one of claims 1 to 8.

**INTERNATIONAL SEARCH REPORT**

International application No. PCT/JP2010/072283

A. CLASSIFICATION OF SUBJECT MATTER
*C08L69/00*(2006.01)i, *C08G64/02*(2006.01)i

According to International Patent Classification (IPC) or to both national classification and IPC

B. FIELDS SEARCHED

Minimum documentation searched (classification system followed by classification symbols)
C08L69/00, C08G64/00-42

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2009-62501 A (Teijin Ltd.), 26 March 2009 (26.03.2009), claims; paragraphs [0048], [0049], [0052], [0057]; examples (Family: none) | 1-9 |
| X | JP 2008-24919 A (Mitsubishi Chemical Corp.), 07 February 2008 (07.02.2008), claims; paragraphs [0090] to [0103], [0118]; examples & US 2010/0190953 A1 & EP 2033981 A1 & WO 2007/148604 A1 & KR 10-2009-0018788 A & CN 101448871 A | 1-9 |

☒ Further documents are listed in the continuation of Box C.　☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 07 February, 2011 (07.02.11) | 22 February, 2011 (22.02.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2010/072283

C (Continuation). DOCUMENTS CONSIDERED TO BE RELEVANT

| Category* | Citation of document, with indication, where appropriate, of the relevant passages | Relevant to claim No. |
|---|---|---|
| X | JP 2009-161746 A (Mitsubishi Chemical Corp.), 23 July 2009 (23.07.2009), claims; paragraphs [0118] to [0124], [0147]; examples & EP 2223951 A1 & WO 2009/075304 A1 & KR 10-2010-0096157 A | 1-9 |
| X | WO 2009/052463 A1 (Sabic Innovative Plastics I.P. B.V.), 23 April 2009 (23.04.2009), claims & US 2009/0105393 A1 & US 2010/0099832 A1 & EP 2203501 A1 & CN 101889041 A | 1-9 |
| A | JP 2009-79190 A (Teijin Ltd.), 16 April 2009 (16.04.2009), entire text (Family: none) | 1-9 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004111106 A
- JP 2006232897 A
- JP 2006028441 A
- JP 2008024919 A
- JP 2009091404 A
- JP 2009091417 A
- JP 2008274007 A
- JP 2007070391 A
- JP 2009280865 A
- JP 2009288107 A
- JP 2010185060 A

### Non-patent literature cited in the description

- Porikaboneto Jushi Handobukku. The Nikkan Kogyo Shinbun, Ltd, 28 August 1992